# EUROPEAN PATENT APPLICATION

(11) **EP 2 896 860 A1**
(43) Date of publication of application: **22.07.2015**
(21) Application number: 14151549.4
(22) Date of filing: 17.01.2014
(51) Int. Cl.: F16K 31/60, F24D 19/10, G05D 23/02

(54) **Thermostat head for a valve, in particular a radiator valve**

(71) Applicant: Danfoss A/S, 6430 Nordborg (DK)
(72) Inventor: Bjerregaard, Henrik, 8800 Viborg (DK); Krogh, Tina Vassard, 8960 Randers (DK); Luckmann, Brian, 8260 Viby (DK)
(74) Representative: Knoblauch, Andreas

(57) **Abstract**

A thermostat head (1) for a valve (2), in particular a radiator valve, is described comprising a base (4), a housing (5) connected to said base (4), a turning handle (6) mounted to said housing (5), wherein said turning handle (6) is rotatable around an axis (7), and a scale indicating an angular position of the turning handle (6) relative to said housing (5).

Such a thermostat head should allow controlling the set temperature in a simple manner.

To this end a gearing is provided translating a rotational movement of said turning handle (6) into a translational movement of said turning handle (6) in a direction parallel to said axis (7), wherein a marking (10) is provided showing an axial position of said turning handle (6) relative to said base (4).

## Description

The present invention relates to a thermostat head for a valve, in particular a radiator valve, comprising a base, a housing connected to said base, a turning handle mounted to said housing, wherein said turning handle is rotatable around an axis, and a scale indicating an angular position of said turning handle relative to said housing.

Such a thermostat head is commonly known and, for example, described in DE 43 20 103 A1. It is used to adjust a set value for a room temperature of a room to be heated by a radiator. Usually, a thermostat element is accommodated in the thermostat head and opens or closes the radiator valve depending on the actual room temperature.

The set temperature to be reached in the room is indicated by a scale. An example of such a scale shows a sequence of numbers, e.g. 1, 2, 3, 4, 5, on a front face of the housing, and the turning handle shows a pointer, for example a point, which is positioned near the circle of numbers so that the set temperature is visualized on the front face of the thermostat head.

However, in some cases it is rather difficult to inspect the front face of the thermostat head. In such cases an uncomfortable situation can arrive in which the temperature of the room is too low or too high.

The object of the invention is to allow control of the set temperature in a simple manner.

This object is solved in a thermostat head described at the outset in that a gearing is provided translating a rotational movement of said turning handle into a translation movement of said turning handle in a direction parallel to said axis, wherein a marking is provided showing an axial position of said turning handle relative to said base.

Such a thermostat head shows the set temperature in two different ways. A first information about the set temperature can be gained from the scale indicating the angular position of the turning handle. A second information can be gained from the marking showing the axial position of the turning handle relative to said base. It is rather unlikely that a person in a room to be heated is not able to obtain at least one of these two informations. Since both informations have the same content it does not matter whether the person can control the set temperature by means of the scale or by means of the marking.

Preferably said marking is visible in a side view of said thermostat head. In this case, the information about the set temperature can be obtained by looking to the front or looking to the side of the thermostat head.

Preferably said marking shows a distance between said base and said turning handle. The distance can easily be shown and gives an unique information about the axial position of the turning handle relative to the base.

Preferably said marking is fixed to said housing. The housing is stationary. Therefore, the marking is stationary as well.

Preferably said marking is positioned between an end of said turning handle next to said base and said base. The turning handle does not need any opening or other modifications. It can simply have the form of a cup. This allows a production with low costs.

Preferably said marking is positioned on a circumferential wall of said housing. The turning handle surrounds a circumferential wall of said housing. When the turning handle is moved axially, the marking on the circumferential wall of the housing is visible to a greater or smaller extend.

Preferably said marking surrounds said housing. In this case the marking is visible over the entire circumference of the thermostat head.

In a preferred embodiment said marking comprises different colors. Colors are easy to identify by a person in a room. They give reliable information even if there is limited space only.

In a preferred embodiment colors of the marking correspond to colors on said scale. In other words, the person gets the same color information independently whether the person looks to the front face of the thermostat head or to the circumferential wall.

In a preferred embodiment said marking comprises a predetermined number of stripes. The use of stripes allows for a simple identification of the set temperature as well.

In this case it is preferred that said stripes have different colors.

In a preferred embodiment a position of said turning handle near said base indicates a low set temperature and a position of said turning handle farther from said base indicates a higher set temperature, wherein an area with a blue color is positioned near said base and an area with a red color is positioned farther from said base. A blue color is usually assigned to a low temperature and a red color is usually assigned to a high temperature. Using blue and red colors allow for a simple overview over the set temperature.

In a preferred embodiment a further colored area is arranged between said blue colored area and said red colored area. In this case more than the two mentioned colors blue and red are available for producing the desired information.

Preferably said marking comprises haptic symbols. In this case it is possible for a person to feel the extent to which the turning handle has been moved away from the base.

Furthermore, it is preferred that said gearing has a non-linear transmission ratio. In other words, it can be realized that the translational movement of the turning handle related to the rotational movement is larger in certain angle areas, for example in the region of a higher set temperature. In this case it is possible to show more clearly that a high set temperature has been adjusted.

A preferred embodiment of the invention will now be described in more detail with reference to the drawing, wherein:
- Fig. 1: shows a thermostat head for a radiator valve with a low set temperature and
- Fig. 2: shows the thermostat head with a higher set temperature.

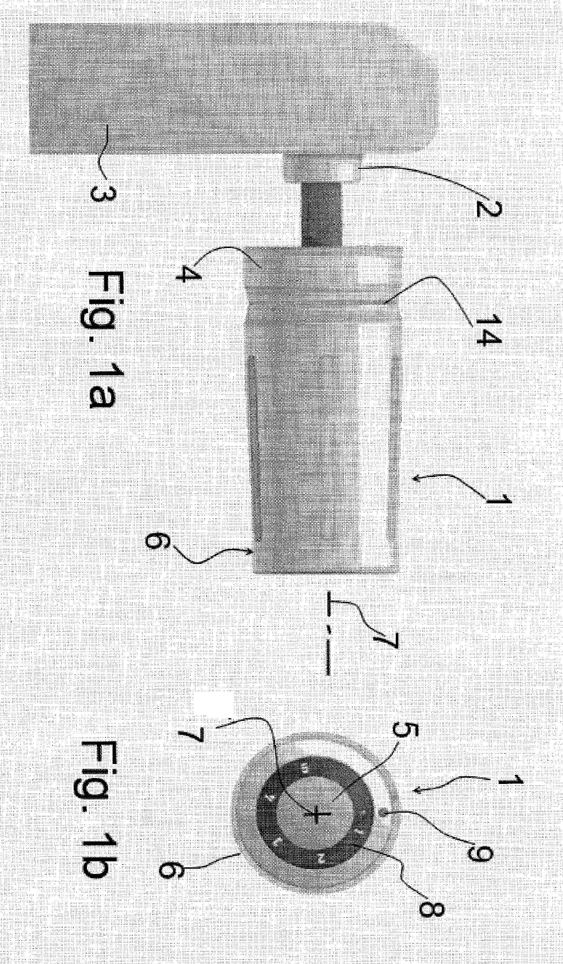

Fig. 1 shows a thermostat head 1 for a radiator valve 2. The radiator valve 2 is part of a radiator 3 which is used to heat a room (not shown) as it is known in the art.

The thermostat head 1 comprises a base 4, a housing 5 connected to said base 4 and a turning handle 6 mounted to said housing. The turning handle 6 is rotatable around an axis 7 which is the middle axis of the housing 5.

The housing 5, at its front face, comprises a scale 8. In the present case, the scale 8 shows a sequence of the numbers 1 to 5 arranged in a circular form. Furthermore, the scale 8 shows different colors. For example, a region around the number 1 is colored in blue and a region around the number 5 is colored in red. Between the blue colored region and the red colored region the gap is filled with a colored area changing the color from blue to red. However, the expression scale is not limited to numbers, but can mean a field of different colors, other symbols or the like.

The turning handle 6 comprises a pointer 9, for example a point. The pointer 9 indicates the angular position of the turning handle 6 relative to the housing 5.

When the pointer 9 is positioned at the position of the number 1 of the scale 8 it is indicated that the set temperature is e.g. 16° C. When the pointer 9 is positioned near the number 5 it is indicated that the set temperature is e.g. 24° C.

However, the front face of the thermostat head shown in Fig. 1b is not always visible. In order to provide a user with the necessary information, the thermostat head is provided with an additional marking showing the set temperature.

To this end a gearing is provided translating a rotational movement of the turning handle 6 into a translational movement of the turning handle 6 parallel to the axis 7. Such a gearing can be realized by means of a screw drive, for example.

The housing 5 comprises at its circumferential wall near the base 4 a marking 10. This marking 10 comprises a number of stripes 11-13. These stripes 11-13 are colored. For example, the stripe 11 nearest to the base 4 is blue and the stripe 13 farthest from the base 4 is red and the stripe 12 has a color between blue and red. The colors of the stripes 11-13 correspond to the colors of the scale 8. In order to keep the drawing simple, only three stripes are shown. However, the number of stripes should correspond to the number of colors of the scale.

Additionally or alternatively the marking 10 can comprise haptic symbols. Such symbols can have the form of small depressions or protrusions. In this case a person can use his fingers to feel the extent to which the turning handle has been moved away from the base. Even if the thermostat is completely invisible, the person can still obtain the information about the set temperature.

When the set temperature of the thermostat head 1 is to be changed, the turning handle 6 is rotated around the axis 7. The gearing means, for example a screw like guiding means between the housing 5 and the turning handle 6 causes a translational movement of the turning handle 6 away from a base 4 or (turned into the other direction) in a direction towards the base 4. In this way an edge 14 of the turning handle 6 nearest to the base 4 covers or gives free one or more of the stripes 11, 12, 13. When the set temperature is increased, the edge uncovers the blue stripe 11 at the beginning, when the set temperature is further increased, the intermediate stripe 12 is uncovered. At the highest set temperature the red stripe 13 is uncovered as well.

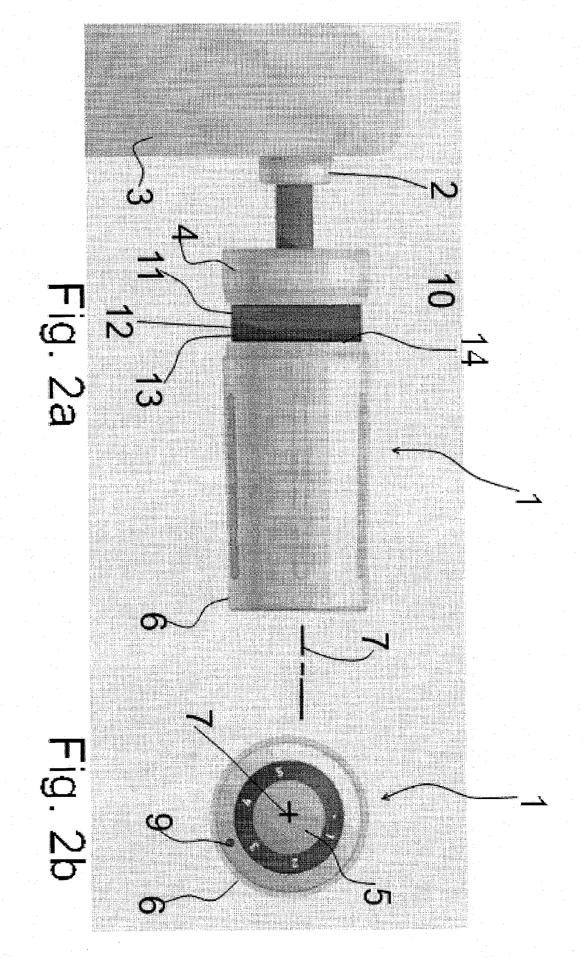

The marking 10 can be seen in side view. The marking 10 surrounds the housing completely, i.e. the marking is visible in the position of the turning handle 6 shown in Fig. 2a independently of the viewing angle of a person looking to the thermostat head 1.

The person turning the turning handle 6 in order to set a value for a temperature to be controlled in the room heated by the radiator 3 now has two possibilities to check the set temperature. The first possibility is to look to the front face. Here the pointer 9 in connection with the scale 8 gives an information about the set temperature. A further possibility is given with the marking 10 which is more or less covered by the turning handle 6.

In a preferred embodiment the gearing has a non-linear transmission ratio. This means that a translational movement of the turning handle is not proportional to the rotational movement. When, for example, the turning handle 6 is rotated from a set temperature of 18 °C to a set temperature of 20 °C the translational movement can be less than the translational movement of the turning handle 6 when the turning handle 6 is rotated from a set temperature of 22 °C to a set temperature of 24 °C. Using such a nonlinear transmission ratio, a higher set temperature can be more clearly visualized.

## Claims

1. Thermostat head (1) for a valve (2) comprising a base (4), a housing (5) connected to said base (4), a turning handle (6) mounted to said housing (5), wherein said turning handle (6) is rotatable around an axis (7), and a scale (8) indicating an angular position of said turning handle (6) relative to said housing (5), **characterized in that** a gearing is provided translating a rotational movement of said turning handle (6) into a translational movement of said turning handle (6) in a direction parallel to said axis (7), wherein a marking (10) is provided showing an axial position of said turning handle (6) relative to said base (4).

2. Thermostat head according to claim 1, **characterized in that** said marking (10) is visible in a side view of said thermostat head (1).

3. Thermostat head according to claim 1 or 2, **characterized in that** said marking (10) shows a distance between said base (4) and said turning handle (6).

4. Thermostat head according to any of claims 1 to 3, **characterized in that** said marking (10) is fixed to said housing (5).

5. Thermostat head according to claim 4, **characterized in that** said marking (10) is positioned between an end (14) of said turning handle (6) next to said base (4) and said base (4).

6. Thermostat head according to any of claims 1 to 5, **characterized in that** said marking (10) is positioned on a circumferential wall of said housing (5).

7. Thermostat head according to claim 6, **characterized in that** said marking (10) surrounds said housing (5).

8. Thermostat head according to any of claims 1 to 7, **characterized in that** said marking (10) comprises different colors.

9. Thermostat head according to claim 8, **characterized in that** colors of the marking (10) correspond to colors of said scale (8).

10. Thermostat head according to any of claims 1 to 9, **characterized in that** said marking (10) comprises a predetermined number of stripes (11-13).

11. Thermostat head according to claim 10, **characterized in that** said stripes (11-13) have different colors.

12. Thermostat head according to claim 8 to 11, **characterized in that** a position of said turning handle (6) near said base (4) indicates a low set temperature and a position of said turning handle (6) farther from said base (4) indicates a higher set temperature, wherein an area with a blue color is positioned near said base (4) and an area with a red color is positioned farther from said base (4).

13. Thermostat head according to claim 12, **characterized in that** a further colored area is arranged between said blue colored area and said red colored area.

14. Thermostat head according to any of claims 1 to 13, **characterized in that** said marking (10) comprises haptic symbols.

15. Thermostat head according to any of claims 1 to 14, **characterized in that** said gearing has a non-linear transmission ratio.
